# EUROPEAN PATENT APPLICATION

(11) **EP 0 984 391 A1**
(43) Date of publication of application: **08.03.2000**
(21) Application number: 98921889.6
(22) Date of filing: 29.05.1998
(51) Int. Cl.: G06M 7/00, G01P 3/36, G01P 3/68, G01P 13/04, G01B 11/00

(54) **DEVICE FOR COUNTING FISH POPULATION PASSING THROUGH A FISH PASS**

(30) Priority: 29.05.1997 JP 15588497
(71) Applicant: Core Corp., Minato-ku, Tokyo 108-0073 (JP); CTI Engineering Co., Ltd, Tokyo 103-0023 (JP); Water Resources Environment Technology Center, Tokyo 102-0083 (JP)
(72) Inventor: TERAZONO, Katsuji, Water Resources Environment T.C, Tokyo 102-0083 (JP); MATSUO, Ichiro, CTI Engineering Co., Ltd, Tokyo 103-0023 (JP); MATSUMOTO, Yoshitaka, Core Corp., Tokyo 108-0073 (JP); MURAKAMI, Osamu, Core Corp., Tokyo 108-0073 (JP)
(74) Representative: Newstead, Michael John
(86) International application number: JP9802390
(87) International publication number: WO9854671

(57) **Abstract**

A fish population counting device for counting the number of fish passing through the fish pass according to directions and fish sizes. Image data produced by the two-line camera (1) that takes pictures simultaneously on two shooting lines (A, B) is sent through the A/D converter (2) and stored one line at a time in image memories (3A, 3B). The image data is then transferred to the processing unit (6), where they are rearranged in the order of shooting for each shooting line (A, B) to generate two-line successive images (A, B). From these two-line successive images (A, B), the outlines of the areas whose label numbers are the same are traced to separate massive figures scattered in the images. The features of the massive figures are extracted and matched against a standard pattern to decide if the massive figures are fish or not. Then, the positions and shapes of all fish scattered in the two-line successive images (A, B) are identified one by one to count the number of fish that have passed through the shooting lines (A, B) during a predetermined length of time. Further, individual fish that are at displaceable positions are taken to be the same fish and, based on the displacements of these fish, the directions and speeds of these individual fish are calculated. From the fish speeds the size of each fish is determined. The number of fish is counted by the size and the direction.

## Description

### Technical Field:

The present invention relates to a device for automatically counting fishes passing through a selected point in a given narrow water passage.

### Related Background Art:

Hitherto, fishes passing through a selected point in a given water passage have been counted by sight by persons standing at selected places along the water passage. Such counting, however, is difficult to be continued an elongated time without lowering the accuracy.

It has been proposed that pictures of fishes are taken by a piece of electronic equipment used to take pictures (called hereinafter " Video Camera" or "Camera"), which is set at a selected point in a given water passage, and that the pictures are analyzed to determine the number of fishes passing through the selected point in the water passage.

The video camera takes pictures intermittently, for example, one each 1/30 seconds. The number of fishes, therefore, cannot be determined without taking account of displacements of fish images by comparing two subsequent pictures all the time.

The video camera has a relatively wide range of horizontal view. It is, therefore, necessary that the video camera be protected against the reflection of surrounding light from the water surface. For examples, the area of the water surface which the video camera can span is covered by anti-reflection sheet, or otherwise, the video camera is put in a water-proof enclosure to be submerged below the water surface.

With a view to solve these problems the same applicant as the present application filed a patent application disclosing a device for taking pictures of fishes passing through a selected point in a given narrow water passage with a linear video camera to analyze and determine the number of fishes from such pictures (see Japanese Patent Application Laid-Open No.6-196139).

Disadvantageously this counting device is insensible to the direction in which fishes swim to pass through the selected point in the water passage, so that it cannot make any decision as to whether the so counted fishes swim upstream or downstream.

Fish images appearing in the pictures taken by the linear video camera are liable for their total lengths to vary with swimming speed; the image of fishes of same length is shortened when the fishes pass through the selected point quickly whereas the image of fishes of same length is elongated when the fishes pass through the selected point slowly. Therefore, the fish size cannot be determined, and the number of fishes cannot be determined in terms of kinds, which may be given in terms of size. Assume that salmon passing through a selected point in the water passage are counted, and that small fishes other than salmon swim slowly, such foreign fishes are erroneously counted to yield a wrong count of salmons.

In view of the above the object of the present invention is to provide a fish counting device which is sensible to the size of fishes, in terms of which fish kinds can be determined, thereby permitting the counting of fishes in terms of fish kinds, and which is sensible to in which direction fishes pass through the selected point.

### Disclosure of the Invention:

A device for counting fish population passing through a selected point in a given water passage comprises:
a two-line camera for taking linear pictures along two parallel lines traversing the water passage at regular time intervals to store the linear-dimensional image data;
means for providing two time-sequential arrangements of the linear-dimensional image data of the pictures taken for a predetermined length of time, each representing the time-sequential event as viewed from each line;
means for retrieving different shapes appearing in the time-sequential event thus represented;
means for determining whether each of the so retrieved shapes is a fish or not;
means for comparing the so determined fish shapes appearing in one of the two time-sequential arrangement of linear pictures with those appearing in the other time sequential arrangement of linear pictures in terms of their relative positions to determine the displacement of each fish shape;
means responsive to the so determined displacement of each fish for determining in which direction the fish shape passes through the selected point in the water passage;
means for determining the speed of each fish shape from its displacement; and
means for determining the time taken for each fish shape to pass through the selected point, lasting from the instant at which the mouth of the fish shape reaches the selected point to the instant at which the caudal fin of the fish shape leaves the selected point, and for determining the fish size from the so determined time and speed,
   whereby the number of fish passing through the selected point for the predetermined length of time may be determined in terms of the fish size and the direction.

### Brief Description of the Drawings:

Fig.1 is a block diagram showing a device for counting fish population passing through a selected point in a given water passage according to the present invention;
Fig.2 is a side view of the water passage, illustrating how a two-line camera is positioned;
Fig.3 is a plane view of the water passage, illustrating how the two-line camera is positioned;
Fig.4 is a flow chart representing the image-processing effected in the fish population counting device;
Fig.5 illustrates examples of two time-sequential arrangements of the linear-dimensional image data, each representing the time-sequential event as viewed from each line;
Fig.6 illustrates two time-sequential arrangements of linear pictures A and B, indicating that fish shapes move from the picture-taking line A to the picture-taking line B; and
Fig.7 illustrates two time-sequential arrangements of linear pictures A and B, indicating that fish shapes move from the picture-taking line B to the picture-taking line A.

### Best Mode of Reducing the Invention to Practice:

With reference to the accompanying drawings a preferable embodiment of the present invention is described below.

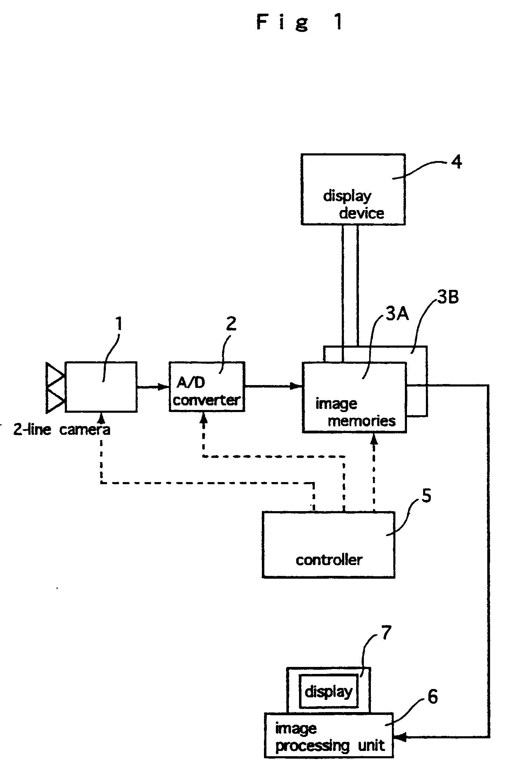

Fig.1 is a block diagram showing a device for counting fish population passing through a selected point in a given water passage according to the present invention.

In Fig.1 parts 1 to 3 make up a recording section for recording the sequential pictures of two parallel, linear areas selected in the water passage, and parts 6 and 7 make up an analyzing section for analyzing the image data of the pictures recorded in the recording section. A two-line camera 1 takes two linear-pictures simultaneously.

A linear camera uses a linear sensor as photoelectric converter. The linear sensor is a signal-transferring type of image sensor, which is composed of a linear arrangement of light-receiving elements such as CCDs.

The two-line camera may be a set of two linear cameras arranged front and rear, or a single camera having a prism for separating a single optical axis into two divisional axes each directed to two linear sensors for taking the pictures of two linear zones simultaneously.

Pieces of information of color densities provided by the two-line camera 1 are convened by an A/D converter 2 to be stored for each of the two linear zones simultaneously in two image memories 3A and 3B.

A display device 4 shows the contents of the image memories 3A and 3B in the form of separate pictures.

A controller 5 controls the two-line camera 1, the A/D converter 2 and the image memories 3A and 3B according to a predetermined proceeding.

An image processing unit 6 includes a computer and other electronics for taking in required data and for effecting required image analyses.

The image processing unit 6 stores reference fish patterns relative to which a decision can be made as to whether the moving objects appearing in the pictures are fish or not.

A display 7 shows a series of pictures of the water passage taken by the two-line camera 1 along with the results of measurement.

Now, one example of counting fish population passing through a selected point in a given water passage is described.

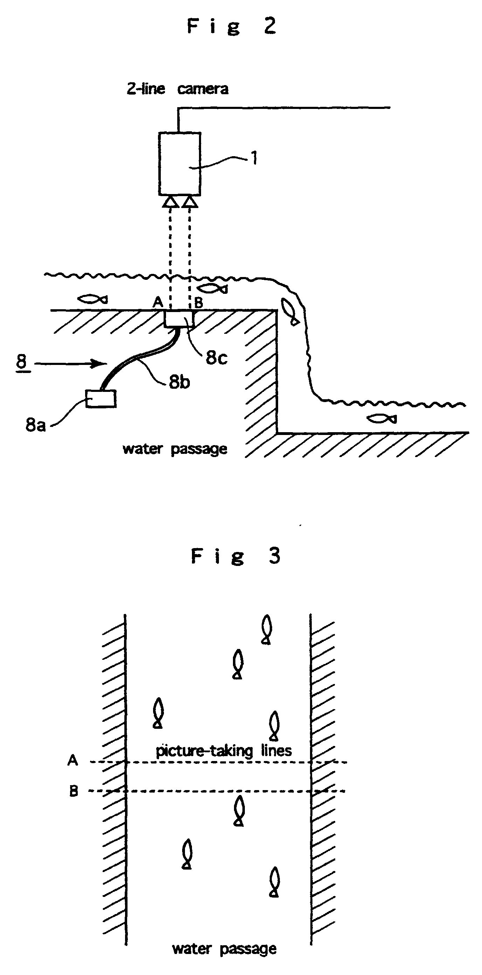

Referring to Figs.2 and 3, a light-projecting unit 8 is laid on the bed of the water passage to throw the beam of light upward, traversing the water passage laterally along two picture-taking lines A and B.

The light-projecting unit 8 comprises a spot light source 8a and a spot-to-linear beam converter 8c connected to the spot light source 8a via a length of optical fiber 8b.

The two-line camera 1 is positioned just above the picture-taking lines A and B, thus permitting the taking of the pictures of the linear zones of water passage defined by the lines A and B respectively.

Three to five hundred pictures are taken each second.

The two-line camera needs to be positioned above the water passage, but the other units may be put (several hundred meters) apart from the water passage.

It is of most concern to select the place where the two-line camera is positioned.

The lateral dimension (perpendicular to the water passage) of each linear zone is equal to the width of the water passage whereas the longitudinal dimension (parallel to the water passage) is several millimeters to one centimeter long (dependent on required precision or the width of the water passage).

The picture-taking lines A and B are separated several millimeters to approximately ten centimeters (two linear cameras arranged front and rear) apart from each other.

The two-line camera 1 is fixed to a support board, which is 20 cm wide to suppress undesired reflection of light in the picture-taking area.

The two-line camera 1 is relatively light, and therefore, it suffices that the support board be strong enough to support its own weight.

A bridge across the water passage may be used to hold the two-line camera above the water passage, provided that the height from the water passage is permitted.

The raised level at which the two-line camera 1 is positioned above the water passage can be determined from the focal length of the lens although the width of the water passage and surrounding conditions still remain as factors for determining the raised level at which the camera is positioned.

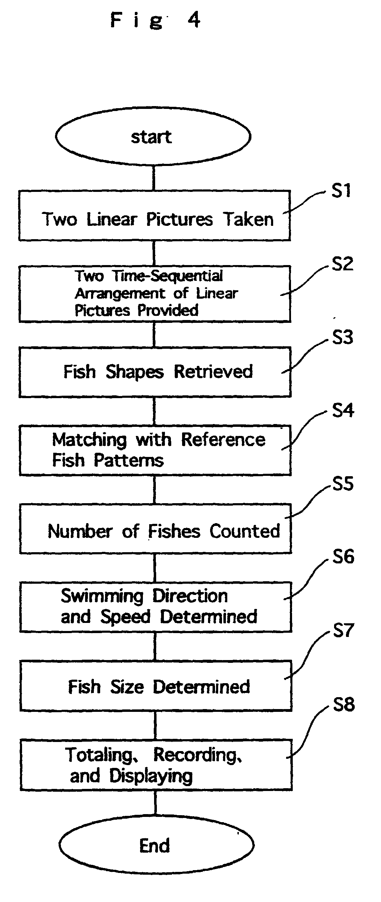

Referring to Fig.4, the manner in which images are processed in the fish population counting device is described.

At first, the two-line camera 1 takes linear pictures along two parallel lines A and B simultaneously.

The linear sensors of the two-line camera 1 provide analog data of the so taken pictures sequentially at their output terminals.

The data thus outputted are convened to corresponding digital data by the A/D convener 2 to be stored for each linear picture in the image memories 3A and 3B allotted to the picture-taking lines A and B reapectively.

The image data are transferred from the image memories 3A and 3B to the image processing unit 6 (S1).

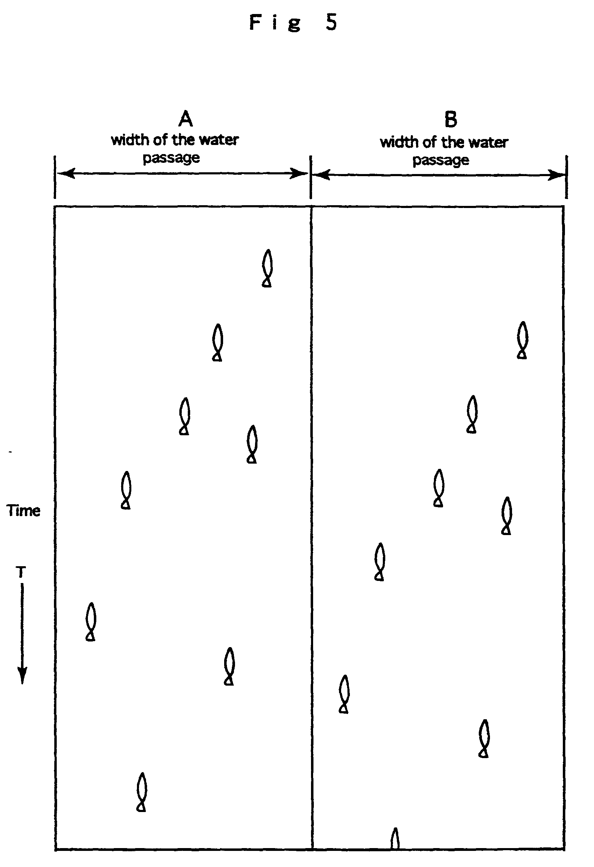

The image processing unit 6 provides two time-sequential arrangements of the linear-dimensional image data or linear pictures A and B (see Fig.5), each representing the time-sequential event as viewed from each picture-taking line A or B (S2).

The two time-sequential arrangements of linear pictures A and B are scanned across their whole areas to distinguish areas in terms of their color densities for separating different shapes of one color density from those of the other color density (S3).

Different shapes of one or the other color density are compared with the reference fish patterns representing fish shapes to make a decision as to whether they are fish or not (S4).

Each and every fish shape in the two time-sequential arrangements of linear pictures A and B is determined in its shape and position to calculate the number of fish shapes passing through the picture-taking lines A and B for the predetermined length of time (S5).

Each and every fish shape in the two time-sequential arrangements of linear pictures A and B is compared to determine which fish shapes are within a presumable distance, regarding the two fish shapes thus found within the presumable distance as one and same fish shape, thus determining the swimming direction and speed from the displacement of one and same fish shape (S6). Two fish shapes appearing apart from the presumable distance( or too apart from the distance within which one and same fish can move in a certain limited time) in the two time-sequential arrangements of linear pictures are different fish shapes.

The time taken for each fish shape to pass through the selected point is determined, lasting from the instant at which the mouth of the fish shape reaches the selected point to the instant at which the caudal fin of the fish shape leaves the selected point, and the fish size is determined from the so determined time and the swimming speed already determined. Thus, the number of fish passing through the selected point for the predetermined length of time are determined in terms of the fish sizes (i.e. fish kinds) and the swimming direction.

The pieces of information thus collected are shown along with time indication in the display 7 (S8).

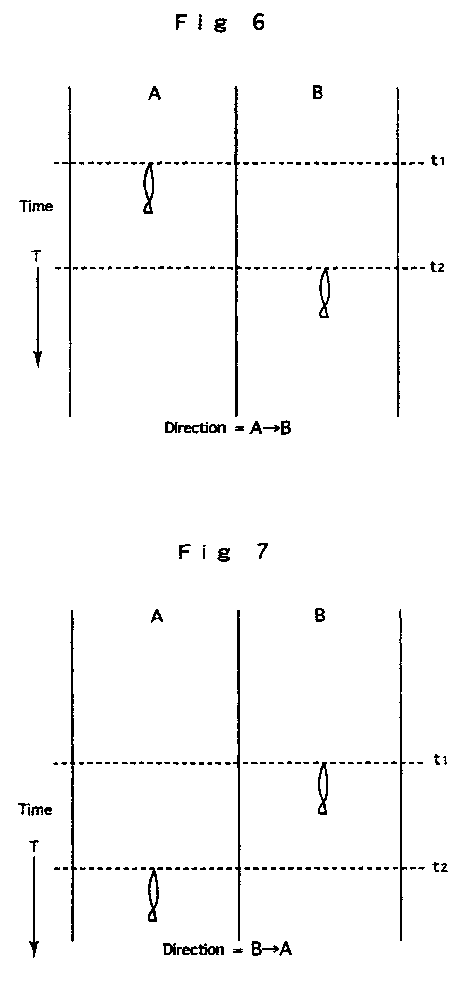

As for determination of the swimming direction: referring to Fig.6, a fish shape appears first in the time-sequential arrangement of linear pictures A which shows an earlier event in the water passage (at early time t1), and then the fish shape appears in the time-sequential arrangement of linear pictures B which shows a sequential or later event in the water passage (at later time t2), and then it is determined that the fish shape moves from the picture-taking line A to the picture-taking line B.

Referring to Fig.7, conversely, a fish shape appears first in the time-sequential arrangement of linear pictures B (at early time t1), and then the fish shape appears in the time-sequential arrangement of linear pictures A (at later time t2), and then it is determined that the fish shape moves from the picture-taking line B to the picture-taking line A.

As seen from Figs.6 and 7, when image data are arranged in the order in which pictures were taken, every fish shape is directed with its mouth up and its caudal fin down whether it swims upstream or downstream; the fish swims with its mouth directed in the direction in which it swims all the time no matter in which direction it may swim, upstream or downstream.

As for the swimming speed: from the time interval between time t1 and time t2 in the time-sequential arrangements of linear pictures A and B it can be determined how long it takes to pass from the picture-taking line A (or B) to the picture-taking line B (or A), and the swimming speed can be determined by dividing the distance between the picture-taking lines A and B by the so determined length of time.

### Industrial Utility:

As may be understood from the above, two linear pictures traversing a given water passage at a selected point are taken simultaneously to provide two series of time-sequential arrangement of linear pictures, thereby permitting measurement of the displacement of each and every fish shape in terms of fish positions appearing in the two series of time-sequential arrangement of linear pictures to determine the swimming direction and speed of each and every fish in the water passage.

Thus, the numbers of fishes swimming upstream or downstream can be counted respectively in terms of swimming directions.

Also, the fish size can be determined from the swimming speed and the time difference between the instant at which the mouth of the fish reaches the selected point and the instant at which the tail fin of the fish leaves the selected point in the water passage. Thus, the numbers of fishes can be counted in terms of fish sizes or kinds.

## Claims

1. A device for counting fish population passing through a selected point in a given water passage comprises:
a two-line camera for taking linear pictures along two parallel lines traversing the water passage at regular time intervals to store the linear-dimensional image data;
means for providing two time-sequential arrangements of the linear-dimensional image data of the pictures taken for a predetermined length of time, each representing the time-sequential event as viewed from each line;
means for retrieving different shapes appearing in the time-sequential event thus represented;
means for determining whether each of the so retrieved shapes is a fish or not;
means for comparing the so determined fish shapes appearing in one of the two time-sequential arrangements of linear pictures with those appearing in the other time sequential arrangement of linear pictures in terms of their relative positions to determine the displacement of each fish shape;
means responsive to the so determined displacement of each fish shape for determining in which direction the fish shape passes through the selected point in the water passage;
means for determining the speed of each fish shape from its displacement; and
means for determining the time taken for each fish shape to pass through the selected point, lasting from the instant at which the mouth of the fish shape reaches the selected point to the instant at which the caudal fin of the fish shape leaves the selected point, and for determining the fish size from the so determined time and the speed of the fish shape already determined,
whereby the number of fish passing through the selected point for the predetermined length of time may be determined in terms of the fish size and the direction.
